(19) Europäisches Patentamt
European Patent Office
Office européen des brevets

(11)     EP 2 486 455 B1

(12)     **FASCICULE DE BREVET EUROPEEN**

(45) Date de publication et mention
de la délivrance du brevet:
**31.08.2016  Bulletin 2016/35**

(51) Int Cl.:
***G03H 1/08*** (2006.01)

(21) Numéro de dépôt: **10776782.4**

(22) Date de dépôt: **04.10.2010**

(86) Numéro de dépôt international:
**PCT/FR2010/052088**

(87) Numéro de publication internationale:
**WO 2011/042649 (14.04.2011 Gazette 2011/15)**

(54) **SUPERPOSITION D'UNE IMAGE VISIBLE ET D'UN HOLOGRAMME SYNTHÉTIQUE**

STAPELUNG EINES SICHTBAREN BILDES UND EINES SYNTHETISCHEN HOLOGRAMMS

STACKING A VISIBLE IMAGE AND A SYNTHETIC HOLOGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2009  FR 0956913**

(43) Date de publication de la demande:
**15.08.2012  Bulletin 2012/33**

(73) Titulaire: **Commissariat à l'Énergie Atomique et aux Énergies Alternatives**
**75015 Paris (FR)**

(72) Inventeur: **MARTINEZ, Christophe**
**F-38100 Grenoble (FR)**

(74) Mandataire: **Thibon, Laurent et al**
**Cabinet Beaumont**
**1, rue Champollion**
**38000 Grenoble (FR)**

(56) Documents cités:
**EP-A2- 0 449 164     JP-A- 2000 214 750**

- **AOKI Y: "WATERMARKING TECHNIQUE USING COMPUTER-GENERATED HOLOGRAMS", ELECTRONICS & COMMUNICATIONS IN JAPAN, PART III - FUNDAMENTALELECTRONIC SCIENCE, WILEY, HOBOKEN, NJ, US, vol. 84, no. 1, PART 03, 1 January 2001 (2001-01-01), pages 21-31, XP000975386, ISSN: 1042-0967, DOI: 10.1002/1520-6440(200101)84:1<21::AID-ECJC 3>3.0.CO;2-T**
- **ROSEN J ET AL: "HIDDEN IMAGES IN HALFTONE PICTURES", APPLIED OPTICS, OPTICAL SOCIETY OF AMERICA, WASHINGTON, DC; US, vol. 40, no. 20, 10 July 2001 (2001-07-10) , pages 3346-3353, XP001081102, ISSN: 0003-6935, DOI: 10.1364/AO.40.003346**

## Description

Domaine de l'invention

La présente invention concerne la superposition d'une image visible et d'un hologramme synthétique.

Exposé de l'art antérieur

La lutte contre la contrefaçon est une préoccupation majeure du domaine de l'industrie. Pour garantir l'origine de leurs produits, les fabricants doivent utiliser des éléments d'identification et de traçabilité sécurisés. Ces éléments doivent être suffisamment complexes à concevoir et à réaliser pour dissuader voir empêcher leur copie. Diverses solutions ont donc été développées à cette fin.

On a proposé d'utiliser des matrices de données (couramment désignées par les termes anglo-saxons data-matrices) qui sont des codes barres bidimensionnels. Ces matrices sont constituées de carrés blancs et noirs qui permettent de coder une information au format binaire. L'information contenue dans la matrice de données peut être protégée par un code de lecture qui empêche son déchiffrement par ceux qui n'en ont pas la clef.

On a également proposé d'utiliser des hologrammes synthétiques formés sur des supports de petites dimensions. Ces hologrammes sont difficiles à reproduire car ils résultent de technologies de fabrication sophistiquées et nécessitent un équipement dédié pour leur lecture.

Le brevet US 7 193 754 propose, pour rendre les reproductions encore plus difficiles, de superposer à un hologramme synthétique une image visible directement. Les zones de l'hologramme non écrites, en blanc, permettent de révéler par contraste avec les zones de l'hologramme écrites une image, par exemple un portrait ou une matrice de données. Un inconvénient du procédé proposé est que la partie de l'hologramme disposée sous l'image visible est supprimée. Cette omission d'une partie de l'hologramme permet toutefois de réussir à lire le contenu de l'hologramme mais avec une résolution réduite, la résolution étant proportionnelle à la surface de l'hologramme, pour un hologramme de définition donnée.

L'article de Y. Aoki, paru dans Electronics and Communications in Japan, Part III, volume 84, N°1, Part 03, 1er janvier 2001, décrit une technique de marquage utilisant des hologrammes générés par ordinateur.

L'article de J. Rosen et al, paru dans Applied Optics, Optical Society of America, Washington D.C., volume 40, N°20, 10 juillet 2001, décrit la réalisation d'images cachées dans des représentations en demi-teinte.

Résumé de l'invention

La présente invention vise à réaliser un support comportant un hologramme synthétique selon la revendication 1. D'autres aspects de l'invention sont couverts par les revendications dépendantes.

La présente invention prévoit aussi un procédé de fabrication d'un hologramme synthétique selon la revendication 9.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 représente un hologramme placé dans le trajet d'un faisceau lumineux ;
la figure 2 représente un exemple d'hologramme synthétique et illustre sa lecture ;
les figures 3A à 3F illustrent un procédé de superposition d'un hologramme et d'une image visible selon un mode de réalisation de la présente invention ;
la figure 4A représente un hologramme codé selon un mode de réalisation de l'invention et la figure 4B est une vue de détail d'un groupe de 5 x 5 cellules, certaines écrites en positif et d'autres en négatif ;
la figure 5 illustre un mode de lecture dans le cas où le déphasage f0 de chaque cellule inversée est différent de $\pi$ ;
la figure 6 représente un montage pour la lecture d'un hologramme selon un mode de réalisation de l'invention ;
la figure 7 illustre un exemple de fabrication de deux cellules, l'une positive, l'autre négative avec un équipement d'écriture de type laser à balayage ;
la figure 8 illustre des images observées d'un hologramme (ici le nombre "38") ;
les figures 9A et 9B illustrent deux exemples de reconstruction d'un hologramme ;
les figures 10A, 10B, 10C illustrent un procédé du décalage ;
la figure 11 illustre un procédé adapté à la formation d'un motif superposé à niveaux de gris ;
la figure 12 illustre un exemple dans lequel le motif superposé est une image de type matrice de données ;

les figures 13A-B et 14A-B montrent des exemples d'hologrammes et de motifs superposées dans le cas où les deux correspondent à des matrices de données ;
les figures 15A-C présentent des résultats observés par simulation ;
La figure 16 donne une vue d'un hologramme de matrice de données avec une matrice de données superposée ; et
les figures 17A-D représentent divers résultats expérimentaux.

Rappels sur les hologrammes synthétiques

La présente invention se base sur une analyse et sur une utilisation spécifique des propriétés d'un hologramme synthétique que l'on va rappeler ci-après.

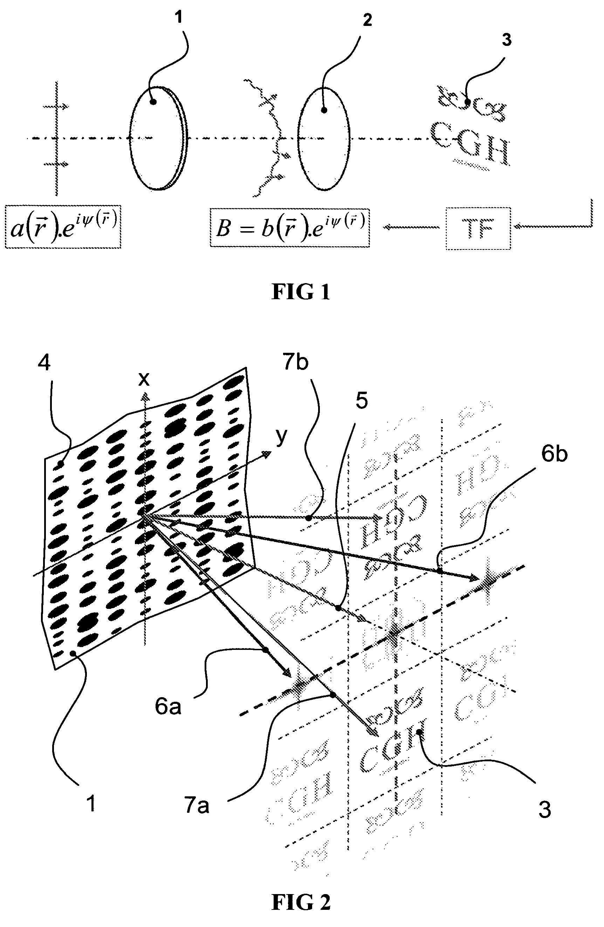

La figure 1 représente un hologramme 1 placé dans le trajet d'un faisceau E. Le faisceau est diffracté par l'hologramme et génère un faisceau B. Ce faisceau est récupéré par une lentille ou autre système optique 2 qui permet la conjugaison de Fourier. Au plan focal objet de la lentille on obtient une image 3 qui correspond à la transformée de Fourier du faisceau B généré en sortie de l'hologramme.

L'holographie synthétique est la science qui permet de générer le faisceau B pour obtenir l'image 3 créée par ordinateur.

Si on désigne par r un vecteur unitaire de coordonnées radiales, et que l'on écrit

$$E = a(r).e^{i\varphi(r)},$$

et

$$B = b(r).e^{i(\psi(r)},$$

la résolution mathématique du problème suppose de calculer la fonction de transfert H donnée par l'équation :

$$H(r) = [b(r)/a(r)].e^{i(\psi(r)-\varphi(r)} \tag{1}$$

Dans la suite de l'exposé on suppose l'onde A plane et uniforme si bien que $E \cong 1$. Dans la pratique l'équation (1) est impossible à satisfaire complètement. Il faut en effet être capable de fabriquer un élément de transmission capable de coder à la fois la phase et l'amplitude de l'onde incidente. Pour s'affranchir de cette contrainte de nombreuses stratégies ont été mises au point.

On considèrera ici la méthode de génération des hologrammes synthétiques présentée par Brown et Lohmann en 1966 "Complex Spatial Filtering with Binary Masks", Appl. Opt. 5, 967-969 qui consiste à segmenter la fonction de transfert H en cellules. Chaque cellule comprend deux régions ayant des caractéristiques différentes de transmission ou de réflexion. Par exemple, chaque cellule comprend une partie opaque et une partie transparente (ou une partie réfléchissante et une partie transparente ou opaque). La dimension relative des deux parties correspond à l'amplitude et le décalage de la partie centrale par rapport au centre de la cellule correspond à la phase.

La figure 2 représente un exemple d'hologramme synthétique 1 et illustre le principe de lecture. L'hologramme est composé d'une matrice de cellules de pas p et comprend des ouvertures 4 par lesquelles la lumière va être diffractée. Les ouvertures sont toutes alignées suivant la direction x. C'est suivant cette direction qu'est codée la phase de l'onde à générer, un décalage de la demi-hauteur d'une cellule (p/2) correspondant à un déphasage de $\pi$.

Deux faisceaux 6a et 6b sont donc générés à droite et à gauche, selon la direction y, correspondant aux ordres +1 et -1 du réseau de diffraction. Ils donnent après passage par la lentille de Fourier deux taches lumineuses symétriques par rapport à la tache centrale 5 de l'ordre 0 du faisceau.

Suivant la direction verticale (direction x), on retrouve deux faisceaux diffractés 7a et 7b, en bas et en haut, correspondant aux ordres +1 et -1 de l'hologramme. Après la lentille de Fourier ce sont ces faisceaux qui vont reproduire l'image 3 recherchée et sa conjuguée. Autour de ces images se répartissent des images supplémentaires générées du fait de l'échantillonnage de l'hologramme.

La lecture se fait donc en illuminant l'hologramme avec un faisceau cohérent de type laser, en récupérant l'onde diffractée par une lentille de Fourier et en captant la zone image recherchée avec une caméra.

La fabrication de l'hologramme suit les étapes suivantes :

1. fabrication par ordinateur d'une image,

2. calcul de la transformée de Fourier (TF) de l'image,

3. codage de l'amplitude de la TF par génération d'une matrice de tailles d'ouvertures,

4. codage de la phase par génération d'une matrice de décentrement des ouvertures,

5. lithographie d'un substrat avec génération d'une matrice d'ouvertures de tailles et de positions définies par les deux matrices précédentes.

Dans le présent exposé, on considère le cas du codage mis au point par Brown et Lohmann en 1966. D'autres méthodes de codage à cellules s'appliquent de la même manière. La méthode par figure d'interférence peut également être utilisée.

Description détaillée

La présente invention se base sur une analyse des propriétés des hologrammes en lecture.

La figure 1 décrite précédemment illustre la lecture d'un hologramme avec une optique de Fourier. Une onde plane E illumine un hologramme H. La lentille de Fourier 2 effectue la transformée de Fourier de l'onde générée par l'hologramme. On obtient une image 3 notée $I_a$. On considérera la fonction $\underline{H}$ descriptive de l'hologramme physique. La fonction de transmission $\underline{H}$ est une fonction binaire que l'on peut représenter sous la forme d'une distribution de valeurs égales à 0 ou à 1. La valeur 0 correspond à une zone opaque ou non réfléchissante, la valeur 1 à une zone de transmission ou de réflexion. L'opération d'holographie peut se représenter mathématiquement, par l'équation :

$$I_a = TF(E\underline{H}) \times TF(E\underline{H})^{\star}$$

Une propriété particulière de l'hologramme, générale au principe de diffraction, concerne la diffraction du négatif de l'hologramme. On appelle négatif d'un hologramme un hologramme dont les parties transmissives et opaques sont inversées. La représentation en négatif de l'hologramme peut être notée mathématiquement 1 - $\underline{H}$. On peut montrer qu'un tel négatif dans lequel on impose un déphasage de n à chacune des cellules fournit en lecture une image $I_b$ identique à l'image $I_a$ de l'hologramme positif correspondant.

De façon générale, l'aspect d'un hologramme en mode positif est une image claire (comprenant beaucoup plus de blanc que de zones noires) alors que celui d'un hologramme en mode négatif est une image sombre (comprenant beaucoup plus de zones noires que de blanc). On propose ici de mêler dans un même hologramme des cellules en mode positif et en mode négatif. Cela permet de générer une image directement visible correspondant au motif selon lequel sont disposées les cellules en mode négatif.

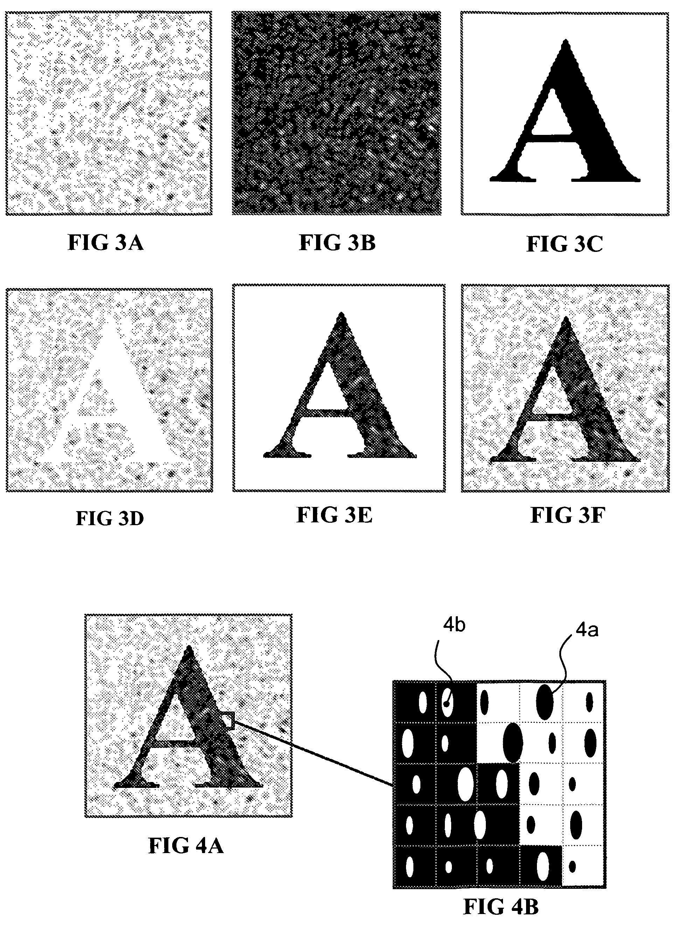

Les figures 3A à 3F illustrent le principe général utilisé ici. La figure 3A (image 1) représente à titre d'exemple l'allure d'un hologramme d'une image non représentée. La figure 3B (image 2) représente la version négative déphasée de π de cet hologramme. La figure 3C (image 3) représente un motif, ici la lettre A, que l'on souhaite faire apparaitre visuellement en superposition à l'hologramme.

L'image 3 est soustraite de l'image 1 comme le montre la figure 3D (image 4). L'image 3 est extraite de l'image 2 comme le montre la figure 3E (image 5). Comme le montre la figure 3F (image 6), les images 4 et 5 sont regroupées pour donner l'image 6.

Comme on le voit, on obtient un nouvel hologramme H' dans lequel la lettre A apparait sur l'image 6 sans que l'on ait perdu aucune donnée de l'hologramme d'origine.

Au moment de la reconstruction, l'image générée par l'hologramme inversé déphasé $\underline{H}$' est mathématiquement identique à celle générée par l'hologramme H.

La figure 4A représente un hologramme selon un mode de réalisation de la présente invention dans le cas du codage retenu. La figure 4B est une vue de détail d'un groupe de 5 x 5 cellules, certaines écrites en positif et d'autres en négatif à une limite du motif directement visible. Les ouvertures étant généralement petites par rapport à la dimension totale de la cellule, on obtient un très bon contraste au niveau de la vision macroscopique de l'image superposée.

La fabrication d'un hologramme synthétique suivant un mode de réalisation de l'invention suit donc les étapes suivantes :

1. fabrication par ordinateur d'une image Ih pour l'hologramme,

2. fabrication par ordinateur d'une image Im pour la vision directe,

3. calcul de la transformée de Fourier (TF) de l'image Ih,

4. codage de l'amplitude de la TF par la génération d'une matrice A de tailles d'ouvertures,

5. codage de la phase de la TF par la génération d'une matrice P de décentrement des ouvertures,

6. génération d'une première matrice A1 d'amplitude correspondant à l'intersection entre A et Im,

7. génération d'une première matrice de phase P1 correspondant à l'intersection entre P et Im,

8. génération d'une seconde matrice A2 d'amplitude correspondant à l'intersection entre la représentation inversée ou négative de A et le complémentaire de Im,

9. génération d'une seconde matrice P2 de phase correspondant à l'intersection entre la matrice P à laquelle est ajoutée un décalage de phase f0 et le complémentaire de Im,

10. réunion des matrices A1 et A2 en une seule matrice A',

11. réunion des matrices P1 et P2 en une seule matrice P',

12. lithographie d'un substrat avec génération d'une matrice d'ouvertures de tailles et de positions définies par les deux matrices précédentes.

On a exposé que pour que l'hologramme combiné (positif-négatif) donne la même image que l'hologramme d'origine, l'hologramme négatif devait être déphasé de $\pi$. Pour cela, on a proposé de déphaser de $\pi$ chaque cellule de l'hologramme. D'autres modes de réalisation peuvent être mis en oeuvre.

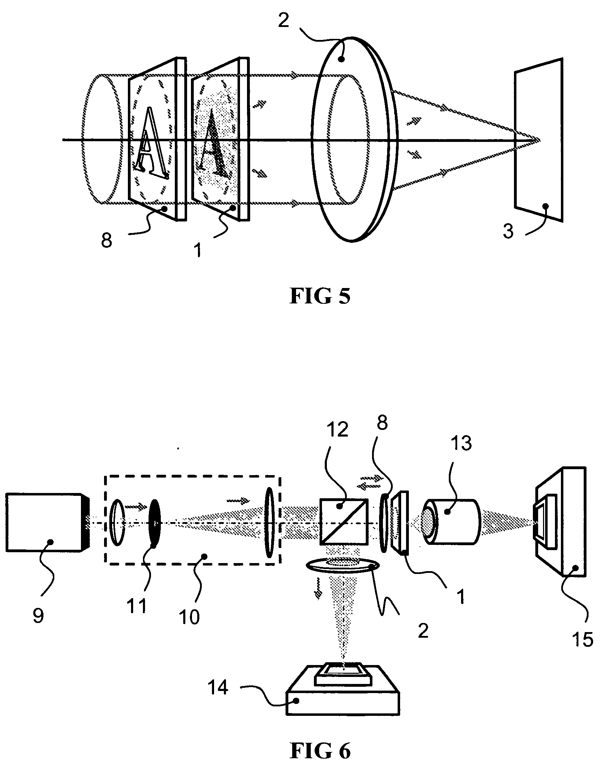

A titre d'exemple la figure 5 montre un cas de lecture pour lequel le déphasage f0 de chaque cellule inversée est différent de $\pi$. Dans ce cas on utilise une lame de phase 8 qui génère un déphasage f1 sur le faisceau incident au niveau de l'image superposée de sorte que le déphasage cumulé vérifie la relation :

$$f1 + f0 = \pm \pi \ modulo2\pi \qquad\qquad (2)$$

Les distributions de déphasage f1 et f0 peuvent également être non constantes à condition que la relation (2) reste vérifiée en tous les points de définition des fonctions.

L'utilisation d'un décalage différent de $\pi$ peut être intéressante en ce que la lecture de l'hologramme nécessite l'utilisation d'une clef de phase.

## MONTAGE POUR LA LECTURE DES HOLOGRAMMES

La figure 6 représente un montage pour la lecture d'un hologramme selon l'invention. On utilise pour cela un montage de lecture en optique de Fourier avec en plus une partie imagerie pour l'image superposée. La figure illustre une version de lecture de l'hologramme en réflexion.

On utilise un laser 9 mis en forme par un système de type télescopique 10 pouvant contenir un filtre spatial 11. Le faisceau d'un diamètre de l'ordre de grandeur de la taille de l'hologramme est incident sur un cube semi-réfléchissant 12. Le faisceau transmis traverse optionnellement une lame de phase 8 puis illumine l'hologramme 1.

Le faisceau diffracté en réflexion traverse à nouveau la lame de phase, dont le déphasage est adapté à cet aller retour (en pratique le déphasage induit par la lame est la moitié du déphasage nécessaire). Ensuite, il traverse le cube et une partie du faisceau diffracté est renvoyée vers l'optique de Fourier 2 puis son image est formée sur un capteur matriciel 14.

Une partie du faisceau incident traverse l'hologramme. Une optique 13 assure alors une relation d'imagerie entre le plan de l'hologramme et le plan du détecteur matriciel 15 de manière à former sur ce dernier l'image superposée à l'hologramme. Pour éviter les perturbations inhérentes à l'imagerie en mode cohérent, une seconde source de lumière incohérente peut être utilisée pour visualiser l'image superposée à l'hologramme sur le capteur 15.

## FABRICATION DES HOLOGRAMMES

La fabrication des hologrammes suivant l'invention ne pose pas de problèmes techniques particuliers. Les cellules de l'hologramme sont divisées en sous parties correspondant à la résolution de l'écriture de l'outil de lithographie employé (faisceau électronique, écriture laser...).

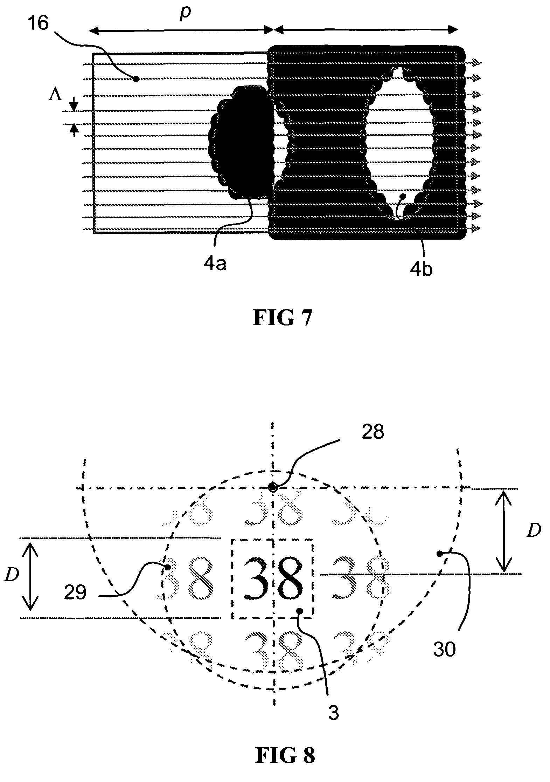

La figure 7 donne un exemple de fabrication de deux cellules, l'une positive, l'autre négative avec un équipement d'écriture laser à balayage. Dans les deux cellules on trouve des ouvertures 4a et 4b. Le laser est allumé ou éteint durant son balayage 16 de manière à former la structure des ouvertures dans des cellules positives ou négatives. La figure présente le cas particulier d'une ouverture décalée de telle sorte qu'elle empiète sur la cellule voisine. Dans ce cas une même ouverture peut être traitée à la fois en mode négatif et positif comme indiqué sur le schéma.

Le pas de balayage A est choisi de manière à offrir le meilleur compromis entre la durée d'écriture et la bonne définition des ouvertures.

CONCEPTION DES HOLOGRAMMES

La figure 1 a permis de présenter le fonctionnement du processus de diffraction des hologrammes synthétiques. Nous détaillons en figure 8 la répercussion sur la reconstruction d'une image 3 recherchée (ici le nombre 38).

L'image reconstruite se trouve en dessous de l'axe optique 28 à une distance D fixée par trois paramètres : la longueur d'onde de lecture $\lambda$, le pas p de définition des cellules et la focale f de la lentille utilisée pour la lecture. La distance D est donnée par :

$$D = \lambda.f/p$$

La distance D correspond également à la taille de l'image.

Autour de l'image centrale se distribuent des répliques provoquées par le caractère échantillonné de l'hologramme. La visibilité de ces répliques baisse au fur et à mesure que l'on s'éloigne de l'image centrale. Cette pondération radiale 29 dépend de l'efficacité de diffraction des ouvertures.

A cette pondération s'ajoute une autre pondération 30 due à l'ouverture numérique de l'optique de lecture. L'ordre conjugué n'a pas été représenté en figure 8 pour simplifier l'explication.

La compréhension de la reconstruction est importante pour un choix optimal de l'hologramme.

Au niveau de l'axe optique 28 se retrouve concentré l'essentiel du faisceau d'illumination non perturbé par l'hologramme. C'est le point de focalisation de la lentille.

Une information supplémentaire a été ajoutée à l'hologramme sous la forme du motif superposé défini par l'image Im. La lecture de l'hologramme va générer deux transformées de Fourier. La première correspond à H et se retrouve distribuée dans les ordres +1 et -1 de l'hologramme. La seconde correspond à la transformée de Fourier de l'image Im. Comme la transformée de Fourier de par sa conception ne génère pas de porteuse angulaire, sa transformée de Fourier se retrouve centrée sur l'axe optique 28.

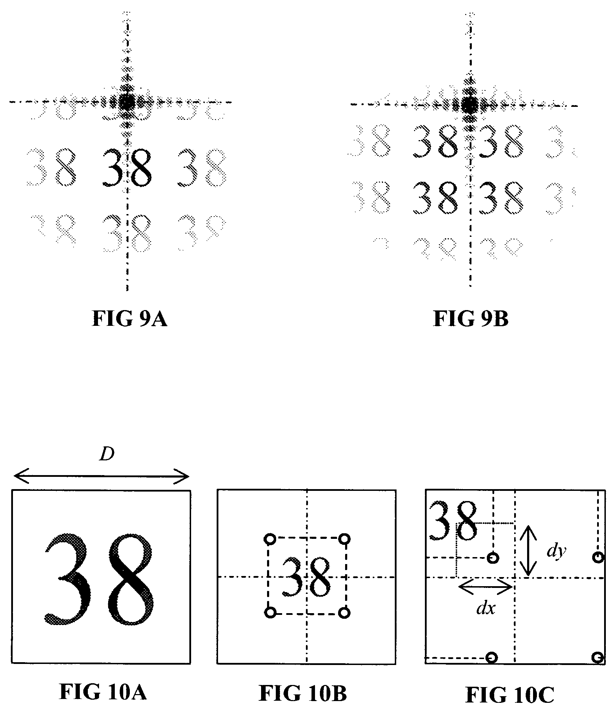

Les figures 9A et 9B illustrent deux exemples de reconstruction où l'on voit respectivement la TF de H formant le nombre 38 entourée de ses répliques et la TF d'une image centrée sur l'axe optique. Dans le cas de ces figures, l'image superposée est une matrice de données et sa TF se distribue en croix.

On remarque sur la figure 9A une superposition dans le plan de la reconstruction entre l'image souhaitée et la TF de l'image superposée. La reconstruction est donc perturbée. Pour remédier à ce problème une solution est de décaler l'information recherchée en dehors de la zone perturbée. C'est ce que montre la figure 9B. La suppression de la superposition des deux TF se fait au détriment de la visibilité de l'image puisque l'on s'éloigne du centre de reconstruction. Un compromis sera donc adopté.

Les figures 10A, 10B, 10C illustrent le principe du décalage. Deux solutions sont disponibles pour générer les décalages dx et dy :

- décaler l'image à sa conception,
- introduire un décalage de phase linéaire sur la phase de l'hologramme lors de son calcul.

Les deux cas sont équivalents mais la seconde solution est certainement à préférer pour sa simplicité. Elle tire parti d'une propriété particulière de la TF décrite dans l'équation suivante :

$$TF[h(x)e^{-2i\pi\upsilon_0 x}] = \tilde{h}(\upsilon - \upsilon_0)$$

Pour optimiser la reconstruction, la zone utile de l'image peut également être concentrée dans l'image à reconstruire comme cela est représenté en figures 10A-C :

- la figure 10A représente l'image recherchée
- la figure 10B représente l'image à coder par l'hologramme, l'image recherchée représente une petite partie de l'image globale,
- la figure 10C représente l'image à coder par l'hologramme dans laquelle la zone utile a été décalée dans les deux directions x et y pour faciliter la reconstruction.

NATURE DES IMAGES SUPERPOSÉES

La figure 3 a donné une vision générale du procédé décrit ici. On y voit un caractère superposé à un hologramme synthétique. Dans ce cas on a donc une image en noir et blanc superposée à l'hologramme.

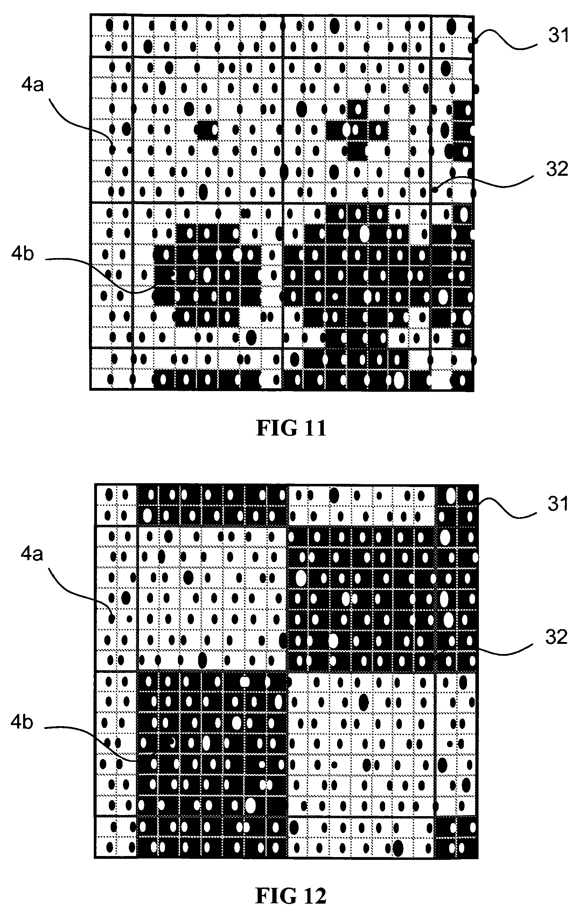

La nature des images superposées peut cependant être différente. En particulier on pourra considérer des images en niveaux de gris. Pour cela on peut définir deux niveaux de cellules comme le montre la figure 11. La cellule 31 est la cellule de définition de l'hologramme. C'est là qu'est insérée l'ouverture 4 qui code l'information de l'hologramme.

La cellule 32 est la cellule de définition du tramage de l'image superposée. La taille de la cellule 32 est donnée par un multiple N supérieur ou égal à 1 de la taille de la cellule 32. Dans le cas illustré le multiple est égal à 7.

L'image en niveaux de gris est définie par un tramage sur une cellule de NxN pixels. Dans le cas de la figure, N = 7 et on peut coder l'image sur au moins 11 niveaux de gris.

Le niveau de gris apparent est donné par la taille des différents groupes de cellules sombres 31. Si des cellules 31 sombres couvrent la totalité de la cellule 32, cette zone d'image apparaitra noire. A l'inverse, si aucune cellule sombre 31 n'est présente dans la cellule 32, cette zone d'image sera perçue comme blanche par l'observateur. Entre les deux, le remplissage de cellules sombres dans la cellule 32 donne à l'observateur l'illusion du niveau de gris lorsque l'image est regardée à une certaine distance. C'est le principe du tramage, largement employé en imprimerie.

Un cas d'application privilégié de l'invention concerne la superposition d'une image de matrice de données. Dans ce cas le pixel de la matrice de données s'apparente à la cellule 32, comme montré en figure 12.

L'intérêt de la matrice de données est que l'image superposée est fortement structurée. A moins de suivre la technique proposée ici, la reconstruction de l'hologramme sous jacent est très difficile.

Dans ce cas également, l'utilisation d'une clef de phase est particulièrement pertinente.

Le niveau de gris apparent est donné par la taille des différents groupes de cellules sombres 31. Si des cellules 31 sombres couvrent la totalité de la cellule 32, cette zone d'image apparaitra noire. A l'inverse, si aucune cellule sombre 31 n'est présente dans la cellule 32, cette zone d'image sera perçue comme blanche par l'observateur. Entre les deux, le remplissage de cellules sombres dans la cellule 32 donne à l'observateur l'illusion du niveau de gris lorsque l'image est regardée à une certaine distance. C'est le principe du tramage, largement employé en imprimerie.

SIMULATIONS

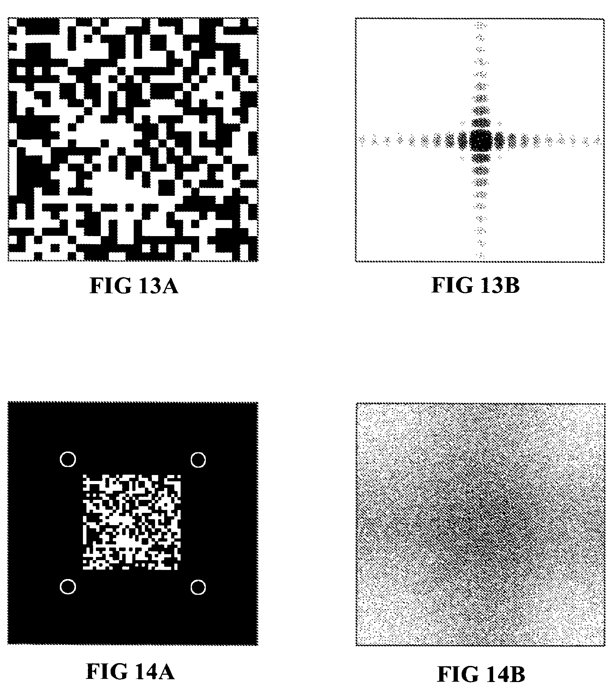

Pour illustrer les avantages du procédé et du dispositif décrits ici, on présente ci-après le cas d'un double codage par matrice de données. Les figures 13A-B et 14A-B montrent les images et les hologrammes utilisés.

Dans la figure 13A, on a simulé une matrice aléatoire de pixels noirs et blancs. La taille de la matrice de données est de 30 x 30 pixels. L'image finale a pour dimension 600 x 600 pixels soit une valeur N = 20.

On représente en figure 13B l'amplitude de la TF de l'image de la figure 13A. Comme on l'a dit, on obtient une figure de diffraction en croix.

La même matrice de données est utilisée pour générer l'image codée de l'hologramme. Pour cela la matrice de données est échantillonnée pour couvrir une zone de 240 x 240 pixels dans une image également de 600 x 600 pixels. La figure 14A montre l'image utilisée pour le codage. La figure 14B représente l'amplitude de la TF. Dans le cas de l'exemple on a utilisé un brouillage de la phase de l'image pour réduire l'importance du pic de Fourier. C'est une technique classique du domaine de l'holographie synthétique - voir C. B. Burckhardt, 1970, "Use of a Random Phase Mask for the Recording of Fourier Transform Holograms of Data Masks", Appl. Opt. 3: 695-700. Pour faciliter la vision des TF, le contraste de l'image a été augmenté en figures 13B et 14B.

Nous avons ensuite simulé la reconstruction de l'hologramme dans le cas d'une lecture à 650 nm avec un pas de l'hologramme de 4 $\mu$m. Le codage de la figure 21b se fait sur 193 valeurs d'amplitude et 80 valeurs de phase.

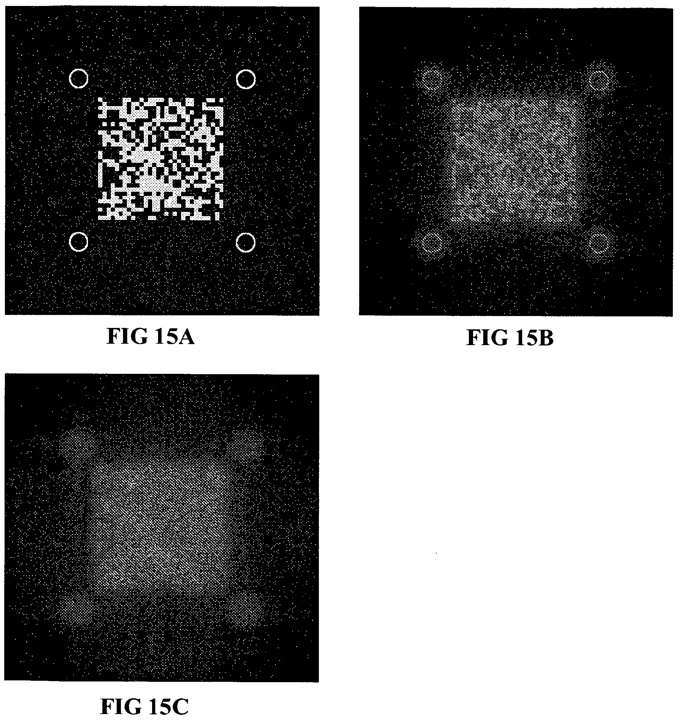

Les figures 15A-C présentent les résultats observés par simulation.

La figure 15A montre le cas d'une lecture parfaite, celle pour laquelle la perturbation induite par l'image superposée est corrigée par le déphasage des pixels inversés. C'est le cas de la présente invention. La figure montre que le résultat est très proche de l'original en figure 14A avec juste de légères variations d'intensité dans les pixels blancs.

La figure 15B montre le cas où les pixels de l'image superposée annulent les valeurs d'amplitude de la TF. C'est le cas de l'art antérieur. Comme on l'a dit, la détection de la matrice est perturbée mais reste envisageable avec un traitement de l'image poussé.

La figure 15C montre le cas où la perturbation induite par l'image superposée n'est pas corrigée par le déphasage des pixels inversés. Cela correspondrait ici à dimensionner un hologramme pour être lu avec une clef de phase et effectuer la lecture sans la clef. On voit que la reconstruction de la matrice est dans ce cas rigoureusement impossible. L'utilisation d'une clef de phase comme revendiqué ici est donc une parade extrêmement efficace pour lutter contre la contrefaçon.

A noter que les simulations ne prennent pas en compte les phénomènes de pondération par la variation radiale de l'efficacité de diffraction. L'image en figure 14A n'est pas non plus décalée comme en figure 10C pour simplifier.

A la vue de cette simulation il apparait clairement que le procédé proposé ici apporte un gain indéniable par rapport à l'art antérieur.

Dans la pratique du montage de relecture, des bruits parasites interviennent immanquablement. Le signal détecté est donc dégradé. La solution proposée par la figure 15B peut alors se montrer inefficace pour la récupération de l'image codée.

RESULTATS EXPERIMENTAUX

On indiquera ci-après des résultats expérimentaux permettant de souligner les avantages du procédé proposé.

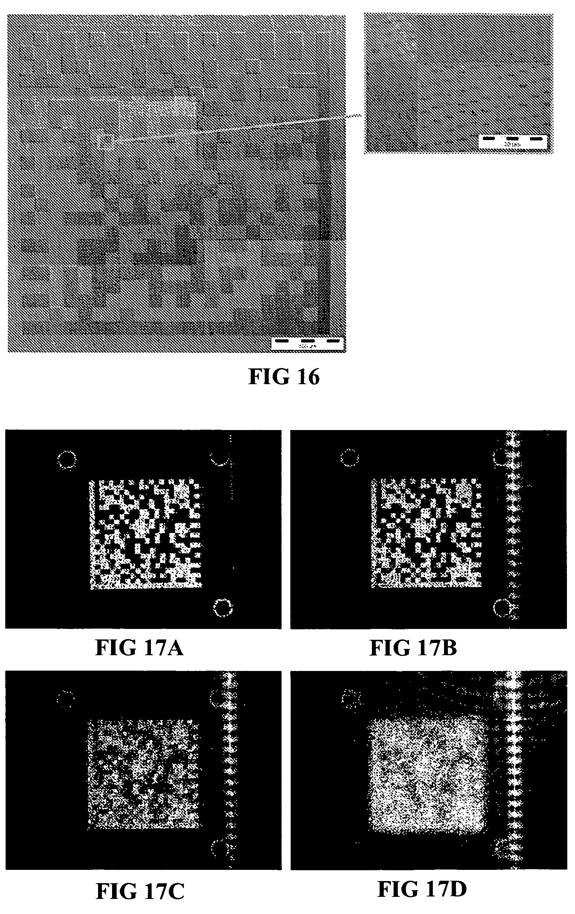

La figure 16 donne une vue d'un hologramme avec une matrice de données superposée et, en haut à droite un agrandissement d'une zone de cette vue. On observe clairement la matrice de données. La photographie a été prise au microscope après insolation d'une couche de $PtO_x$ avant la gravure chimique. Après gravure chimique le contraste est encore plus prononcé.

Pour les besoins de la démonstration quatre hologrammes ont été gravés pour comparaison avec la figure 15. Les hologrammes sont lus en réflexion avec un montage similaire à celui de la figure 6.

En figure 17A on montre le cas d'un hologramme standard, sans image superposée. La détection de la matrice de données semble efficace malgré un bruit de "speckle".

En figure 17B on montre le cas de la figure 15A. Il s'agit d'un hologramme de matrice de données avec une matrice de données macroscopique superposée suivant l'invention. Elle est écrite en cellules positives et négatives avec une correction de phase. On remarque une dégradation du signal par rapport à la figure 17A mais la détection de la matrice de données reste possible avec un bon traitement d'image. La dégradation entre les résultats des figures 17A et 17B peut être due à un problème de résolution des petits motifs dans les cellules négatives.

La figure 17C montre le cas de l'art antérieur. Seule une partie des pixels de la matrice de données sont écrits. On aperçoit encore la matrice de données mais l'identification de ses pixels semble plus difficile que dans le cas 24b.

Enfin la figure 17D montre le cas des images superposées sans correction de phase (cas de la figure 15C). La matrice de données n'est plus identifiable. Ce cas, qui correspond à l'absence d'une clef de phase, montre tout l'intérêt de l'invention associée à un système de clef de phase.

Divers modes de réalisation avec diverses variantes ont été décrits ci-dessus. On notera que l'homme de l'art pourra combiner divers éléments de ces divers modes de réalisation et variantes sans faire preuve d'activité inventive.

**Revendications**

**1.** Support comportant un hologramme synthétique, ledit hologramme synthétique étant composé d'une première image constituée d'un réseau de cellules de codage de mêmes dimensions résultant d'un codage de Lohmann dont chacune comprend des parties claires et sombres, **caractérisé en ce qu'**il comprend une deuxième image, visible, superposée à l'hologramme synthétique, formée sur une partie de l'hologramme synthétique, dans laquelle les parties claires et sombres des cellules de l'hologramme résultant du codage de Lohmann sont inversées et ont une phase modifiée d'une valeur de décalage non nulle par rapport au reste de l'hologramme synthétique de la première image.

**2.** Hologramme synthétique selon la revendication 1, dans lequel le décalage est constant et égal à $\pi$, d'où il résulte que la reconstruction optique de l'hologramme synthétique n'est pas perturbée et que la deuxième image est directement observable.

**3.** Hologramme synthétique selon la revendication 1, dans lequel le décalage est constant et différent de $\pi$, la reconstruction optique de l'hologramme synthétique étant effectuée avec une clef de phase apportant selon la forme de la deuxième image un déphasage complémentaire à $\pi$ dudit décalage.

**4.** Hologramme synthétique selon la revendication 1, dans lequel le décalage n'est pas constant et différent de $\pi$ dans différentes zones de la deuxième image, la reconstruction optique de l'hologramme synthétique étant effectuée avec une clef de phase apportant selon la forme desdites zones de la deuxième image un déphasage complémentaire à $\pi$ dudit décalage.

**5.** Hologramme synthétique selon la revendication 1, dans lequel la deuxième image est une image en niveau de gris obtenue par tramage sur la base d'une cellule de tramage, la taille de la cellule de tramage étant un multiple entier de la taille d'une cellule de l'hologramme synthétique.

**6.** Hologramme synthétique selon la revendication 1, dans lequel la deuxième image est une matrice de pixels noirs et blancs aléatoire ou semi aléatoire, la taille d'un pixel de la deuxième image étant un multiple entier supérieur ou égal à 1 de la taille d'une cellule de l'hologramme synthétique.

**7.** Hologramme synthétique selon la revendication 1, dans lequel la première image codée par l'hologramme synthétique présente une zone utile réduite, décalée du centre de l'image globale d'une distance au moins égale à la moitié de la largeur de la zone utile.

**8.** Hologramme synthétique selon la revendication 7, dans lequel la première image est décalée par l'introduction d'une composante de phase linéaire dans la distribution de phase de l'hologramme synthétique.

**9.** Procédé de fabrication d'un hologramme synthétique superposé à un motif directement observable, comprenant les étapes suivantes :

fabrication par ordinateur d'une image Ih pour l'hologramme synthétique,
fabrication par ordinateur d'une image Im du motif,
calcul de la transformée de Fourier (TF) de l'image Ih,
codage de l'amplitude de la TF par génération d'une matrice A de tailles d'ouvertures,
codage de la phase de la TF par génération d'une matrice P de décentrement des ouvertures,
génération d'une première matrice A1 d'amplitude correspondant à l'intersection entre A et Im,
génération d'une première matrice de phase P1 correspondant à l'intersection entre P et Im,
génération d'une seconde matrice A2 d'amplitude correspondant à l'intersection entre la représentation inversée ou négative de A et le complémentaire de Im,
génération d'une seconde matrice P2 de phase correspondant à l'intersection entre la matrice P à laquelle est ajoutée un décalage de phase f0 et le complémentaire de Im,
réunion des matrices A1 et A2 en une seule matrice A',
réunion des matrices P1 et P2 en une seule matrice P',
lithographie d'un substrat avec génération d'une matrice d'ouvertures de tailles et de positions définies par les deux matrices précédentes.

**Patentansprüche**

**1.** Ein Träger, wobei der Träger ein synthetisches Hologramm aufweist, wobei das synthetische Hologramm aus einem ersten Bild besteht, das aus einem Array von Kodierzellen derselben Größe gebildet wird, das aus einer Lohmann Kodierung resultiert, wobei jede der Kodierzellen helle und dunkle Teile aufweist, **dadurch gekennzeichnet, dass** es ein zweites sichtbares Bild aufweist, das dem synthetischen Hologramm überlagert ist, und das auf einem Teil des synthetischen Hologramms ausgebildet ist, in dem die hellen und dunklen Teile des Hologramms invertiert sind und eine Phase aufweisen, die durch einen nicht Null Offset Wert modifiziert ist, bezüglich dem Rest des synthetischen Holgramms des ersten Bildes.

**2.** Das synthetische Holgramm nach Anspruch 1, wobei der Offset konstant ist und gleich $\pi$ ist, wobei die optische Rekonstruktion des synthetischen Hologramms nicht gestört ist und das zweite Bild direkt zu betrachten ist.

**3.** Das synthetische Holgramm nach Anspruch 1, wobei der Offset konstant ist und unterschiedlich zu $\pi$ ist, wobei die optische Rekonstruktion des synthetischen Hologramms ausgeführt wird mit einem Phasenschlüssel, der einen Phasenshift, entsprechend der Form des zweiten Bildes, einführt, der komplementär zu $\pi$ des Offsets ist.

**4.** Das synthetische Holgramm nach Anspruch 1, wobei der Offset nicht konstant ist und unterschiedlich zu $\pi$ ist in unterschiedlichen Bereichen des zweiten Bildes, wobei die optische Rekonstruktion des synthetischen Hologramms ausgeführt wird mit einem Phasenschlüssel, der einen Phasenshift, entsprechend der Form der Bereiche des zweiten Bildes, einführt, der komplementär zu $\pi$ des Offsets ist.

**5.** Das synthetische Holgramm nach Anspruch 1, wobei das zweite Bild ein Graustufen Bild ist, das durch eine Rasterung, bzw. ein Screening basierend auf einer Rasterzelle bzw. einer Screeningzelle, erhalten wird, wobei die Größe der Screeningzelle ein ganzzahliges Vielfaches der Größe einer Zelle des synthetischen Hologramms ist.

**6.** Das synthetische Holgramm nach Anspruch 1, wobei das zweite Bild eine zufällige- oder eine semi-zufällige Matrix von schwarzen und weißen Pixel ist, wobei die Größe eines Pixel des zweiten Bildes um ein ganzzahliges Vielfaches größer oder gleich 1 der Größe einer Zelle des synthetischen Hologramms ist.

7. Das synthetische Holgramm nach Anspruch 1, wobei das erste Bild, das durch das synthetische Hologramm kodiert ist, einen abnehmenden nutzbaren Bereich aufweist, der von dem Zentrum des generellen Bildes um einen Abstand versetzt ist, der wenigstens gleich der Hälfte der Breite des nutzbaren Bereiches ist.

8. Das synthetische Holgramm nach Anspruch 7, wobei das erste Bild versetzt ist durch das Einführen einer linearen Phasenkomponente in der Phasenverteilung des synthetischen Hologramms.

9. Ein Verfahren zum Herstellen eines synthetischen Hologramms das mit einem direkt zu beobachtenden Muster oder Raster überlagert ist, wobei das Verfahren die folgenden Schritte aufweist:

   computerunterstütztes Herstellen eines Bildes Ih für das synthetische Hologramm;
   computerunterstütztes Herstellen eines Bildes Im des Rasters;
   Berechnen einer Fourier Transformation (FT) des Bildes Ih;
   Kodieren der Amplitude der FT durch das Erzeugen einer Matrix A von Aperturgrößen;
   Kodieren der Phase der FT durch das Erzeugen einer Apertur Offsetmatrix P;
   Erzeugen einer ersten Amplitudenmatrix A1, entsprechend dem Schnittbereich zwischen A und Im;
   Erzeugen einer ersten Phasenmatrix P1, entsprechend dem Schnittbereich zwischen P und Im;
   Erzeugen einer zweiten Amplitudenmatrix A2, entsprechend dem Schnittbereich zwischen der invertierten oder negativen Darstellung von A und dem Komplementären zu Im;
   Erzeugen einer zweiten Phasenmatrix P2, entsprechend dem Schnittbereich zwischen der Matrix P, zu der ein Phasenshift f0 addiert wird, und dem Komplementären zu Im;
   Zusammenführen der Matrizen A1 und A2 in einer einzelnen Matrix A';
   Zusammenführen der Matrizen P1 und P2 in einer einzelnen Matrix P';
   Lithographieren eines Substrats mit der Erzeugung einer Matrix von Aperturen mit einer Größe und Position, die durch die zwei vorhergehenden Matrizen definiert sind.

## Claims

1. A support comprising a synthetic hologram said synthetic hologram being comprised of a first image formed of an array of coding cells of the same sizes resulting from a Lohmann coding, each of which comprises light and dark portions, **characterized in that** it comprises a second visible image superposed to the synthetic hologram, formed on a portion of the synthetic hologram, in which the light and dark portions of the hologram are inverted and have a phase modified by a non-zero offset value with respect to the rest of the synthetic hologram of the first image.

2. The synthetic hologram of claim 1, wherein the offset is constant and equal to $\pi$, whereby the optical reconstruction of the synthetic hologram is not disturbed and the second image can be directly observable.

3. The synthetic hologram of claim 1, wherein the offset is constant and different from $\pi$, the optical reconstruction of the synthetic hologram being performed with a phase key introducing, according to the shape of the second image, a phase shift complementary to $\pi$ of said offset.

4. The synthetic hologram of claim 1, wherein the offset is not constant and is different from $\pi$ in different areas of the second image, the optical reconstruction of the synthetic hologram being performed with a phase key introducing, according to the shape of said areas of the second image, a phase shift complementary to $\pi$ of said offset.

5. The synthetic hologram of claim 1, wherein the second image is a grey-level image obtained by screening based on a screening cell, the size of the screening cell being an integral multiple of the size of a cell of the synthetic hologram.

6. The synthetic hologram of claim 1, wherein the second image is a random or semi-random matrix of black and white pixels, the size of a pixel of the second image being an integral multiple greater than or equal to 1 of the size of a cell of the synthetic hologram.

7. The synthetic hologram of claim 1, wherein the first image coded by the synthetic hologram has a decreased useful area, offset from the center of the general image by a distance at least equal to half the width of the useful area.

8. The synthetic hologram of claim 7, wherein the first image is offset by the introduction of a linear phase component in the phase distribution of the synthetic hologram.

9. A method for manufacturing a synthetic hologram superposed to a directly observable pattern, comprising the steps of:

computer manufacturing of an image Ih for the synthetic hologram;
computer manufacturing of an image Im of the pattern,
calculation of the Fourier transform (FT) of image Ih,
coding of the amplitude of the FT by generation of a matrix A of aperture sizes,
coding of the phase of the FT by generation of an aperture offset matrix P,
generation of a first amplitude matrix A1 corresponding to the intersection between A and Im,
generation of a first phase matrix P1 corresponding to the intersection between P and Im,
generation of a second amplitude matrix A2 corresponding to the intersection between the inverted or negative representation of A and the complementary of Im,
generation of a second phase matrix P2 corresponding to the intersection between matrix P, to which is added a phase shift f0, and the complementary of Im,
gathering of matrixes A1 and A2 in a single matrix A',
gathering of matrixes P1 and P2 in a single matrix P',
lithography of a substrate with the generation of a matrix of apertures having sizes and positions defined by the two previous matrixes.

$$a(\vec{r}).e^{i\psi(\vec{r})}$$

$$B = b(\vec{r}).e^{i\psi(\vec{r})} \longleftarrow \boxed{TF} \longleftarrow$$

**FIG 1**

**FIG 2**

**FIG 3A**

**FIG 3B**

**FIG 3C**

**FIG 3D**

**FIG 3E**

**FIG 3F**

**FIG 4A**

4b

4a

**FIG 4B**

**FIG 5**

**FIG 6**

**FIG 7**

**FIG 8**

**FIG 9A**

**FIG 9B**

**FIG 10A**

**FIG 10B**

**FIG 10C**

**FIG 11**

**FIG 12**

**FIG 13A**

**FIG 13B**

**FIG 14A**

**FIG 14B**

**FIG 15A**

**FIG 15B**

**FIG 15C**

**FIG 16**

**FIG 17A**

**FIG 17B**

**FIG 17C**

**FIG 17D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7193754 B

**Littérature non-brevet citée dans la description**

- **Y. AOKI.** *Electronics and Communications in Japan,* 01 Janvier 2001, vol. 84 (1
- **J. ROSEN et al.** Applied Optics. Optical Society of America, 10 Juillet 2001, vol. 40
- **BROWN ; LOHMANN.** Complex Spatial Filtering with Binary Masks. *Appl. Opt.,* 1966, vol. 5, 967-969
- Use of a Random Phase Mask for the Recording of Fourier Transform Holograms of Data Masks. **C. B. BURCKHARDT.** Appl. Opt. 1970, vol. 3, 695-700